# EUROPEAN PATENT APPLICATION

(11) **EP 2 151 765 A1**
(43) Date of publication of application: **10.02.2010**
(21) Application number: 08380231.4
(22) Date of filing: 29.07.2008
(51) Int. Cl.: G06F 13/40, H01R 13/62

(54) **USB connection blocker and anti-theft device**

(71) Applicant: Teldat S.A., 28760 Tres Cantos Madrid (ES)
(72) Inventor: Mexía Guerrero, Rafael, 28760 Tres Cantos, Madrid (ES); Rico Rodriguez, Eladio, 28760 Tres Cantos, Madrid (ES)
(74) Representative: ABG Patentes, S.L.

(57) **Abstract**

The invention consists of a steel sheet, folded, coupled or forming part of the metal cover itself which the USB Receptacle "Type A" standard connector incorporates for its attachment, which permits the insertion of any USB device but, once inserted, it is impossible to remove it without gaining access to the interior of the equipment and/or use a tool (such as, for example, a screwdriver).

## Description

### TECHNICAL FIELD

The present invention belongs to the technical fields of electric components, computing, communications (especially telecommunications) and, in general, to any technical field that involves the use or employment of electronic equipment or products which have USB connectors, particularly USB type A connectors.

### BACKGROUND OF THE INVENTION

USB connectivity is originally devised to be able to remove and insert USB devices into the equipment that supports them in a simple way.

Currently, there exist on the market an infinite number of USB devices (Modems, Memory Sticks, gaming devices, mice, etc.) which are used in an infinite amount of applications. For the conception of the USB connection, these devices can be removed easily, which means that they are susceptible to:
a) suffer a chance and undesired disconnection, and
b) be removed with the intention of stealing them

with respect to point a) there exist on the market some "blocking" devices which make chance disconnection difficult based on increasing the pressure which is exerted on the inserted connector, but do not prevent them completely. Additionally, the blocking/unblocking device is accessible from the outside of the equipment and is easily manipulatable, which means that in no case does it prevent them from being removed.

The USB connection, both from a mechanical and an electrical point of view, is devised for insertion and removal of the USB devices, so the connectors which currently exist do not contemplate the possibility of completely blocking the device once inserted.

### SUMMARY OF THE INVENTION

With the object of solving the technical problems referred above, as well as others which will be mentioned further on when the advantages thereof are discussed, the present invention, in a preferred embodiment, consists of a steel sheet, folded, coupled or forming part of the metal cover which the USB port ("Receptacle") "Type A" standard connector incorporates for its attachment, which permits the insertion of any USB device but, once inserted, it is impossible to remove it without gaining access to the interior of the equipment and/or use a tool (such as, for example, a screwdriver).

The present invention foresees, therefore, and in a more general manner, in a first inventive aspect, a device intended to be incorporated in a USB receptacle connector, which comprises:
a) mechanical connection means between said device and said USB Receptacle connector; and
b) means capable of cooperating with a USB Plug connector at the time it is inserted into said USB Receptacle connector, so that, upon trying to remove said USB Plug connector, a locking or blocking thereof is produced which opposes said removal.

In an advantageous way, the device object of the invention comprises a sheet of rigid or flexible material which features at least one projection intended to:
a) mechanically connect said device with said USB. Receptacle connector; and, at the same time,
b) cooperate with a USB Plug connector at the time it is inserted into the USB receptacle connector, so that, upon trying to remove said USB plug connector a locking or blocking thereof is produced which opposes said removal.

According to advantageous embodiments, said material is steel and said sheet features at least one opening where said at least one projection is found.

According to another specific example, said sheet features at least two folds or creases with the object of adapting to the shape of said USB Receptacle connector, which can be at acute angles or right angles.

In accordance with a particularly advantageous example of the invention, said at least one projection consists of two claws or hooks which cooperate both with the two cavities of said USB Receptacle connector in order to perform said mechanical connection and with the corresponding rectangular openings of said USB Plug connector in order to produce said locking or blocking. Furthermore, said claws or hooks can be pointed.

According to other examples, the device further comprises means capable of cooperating with a tool exterior to the device and which causes the unblocking of said USB Plug connector and makes its removal possible, which can only be accessible from inside the electronic equipment where said USB Receptacle connector is found, or from its exterior, if said sheet features a second opening for the passage of the tool.

According to other embodiments, means are incorporated capable of attaching said device to a printed circuit board or to another internal part of the electronic equipment where said USB Receptacle connector is installed or it is manufactured so that said device forms an integral part of the structure of said USB Receptacle connector.

The present invention incorporates, in a second inventive aspect, a method of preventing the undesired disconnection between the USB Receptacle connector and a USB Plug connector characterized by the following steps:
a) modifying said USB receptacle connector so that the two cavities are free of their corresponding strips or flanges;
b) providing a device according to the present invention or some of its specific embodiments;
c) incorporating said device to said USB Receptacle connector so that the projections thereof cooperate with said cavities; and
d) inserting said USB Plug connector into said USB Receptacle connector so that said projections of said device cooperate with the openings of said USB Plug connector so that it is blocked or locked.

The method according to the present invention optionally includes the step of using a tool which cooperates with said device with the object of unblocking the connection and allowing for the removal of said USB Plug connector.

Another advantage of the present invention consists in that, by using a sheet, preferably metallic, there is no need to use springs.

### BRIEF DESCRIPTION OF THE DRAWINGS

In order to complement the description being made and in order to help towards a better understanding of the characteristics of the invention, in accordance with a preferred example of embodiment thereof, a set of drawings is attached as an integral part of said description, wherein the following, in an illustrative and non-limitative character, has been represented:
- fig. 1: shows an example of USB Plug connector;
- fig. 2: shows a first example of embodiment in accordance with the present invention;
- fig. 3: shows a second example of embodiment of a device in accordance with the present invention;
- fig. 4: shows a third example of embodiment of a device in accordance with the present invention;
- fig. 5: shows two examples of functional variants which can be incorporated to any device in accordance with the present invention.

### DESCRIPTION OF A PREFERRED EMBODIMENT

The invention, as has been previously indicated, consists of a folded steel sheet which is adapted to a USB Receptacle type A standard connector of the market, whereto a small modification needs to be made which will be detailed below. Optionally, said modification could also be introduced when manufacturing the connector.

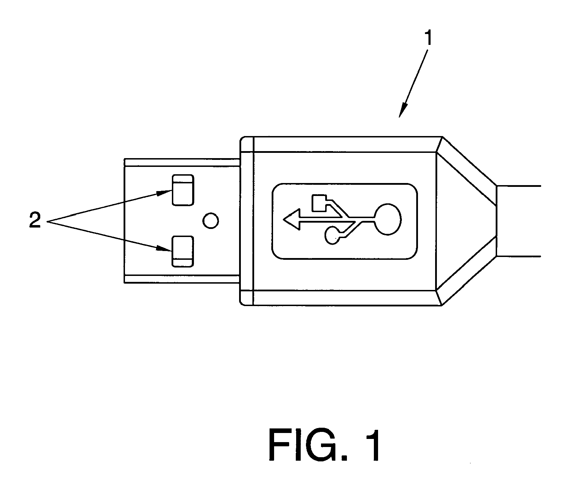

All USB devices with USB Type A connectors, both Plug and Receptacle, have, by definition of the standard, perfectly defined mechanical dimensions and characteristics. In **figure 1****,** a USB Plug 1 Type A connector is shown, where some of these mechanical dimensions and characteristics can be checked, amongst which stand out two rectangular openings 2 in the upper part which is habitually used, so that by means of flanges in the Receptacle connector, it makes the removal of the connector difficult. The idea of this invention is to use these openings, not to make the removal difficult, but rather to prevent it.

The sheet object of the present invention can adopt different shapes and sizes depending on the Receptacle connector whereto it has to adapt and whether or not it is desired that the manner of unblocking to be more or less simple. Up to three sheets, that fulfil this function, are going to be described herein, but all of them with common characteristics:
- The sheets have claws or hooks (5), which in the shape of a hook, permit the insertion of the USB connector but prevent the removal thereof.
- The claws (5) are designed so that, upon trying to remove the connector without the suitable unblocking, they tend to "lock", so that the removal thereof by force becomes impossible or creates considerable damage in the receptacle connector and possibly in the equipment.
- The claws (5) exert a permanent pressure on the interior body of the receptacle connector which facilitates the locking of the claws when one attempts to remove the device without unblocking it.
- The locking and the pressure exerted are due to the shape of the piece and the flexion of the material with which it is manufactured (preferably a steel sheet).

In all of the cases presented, the piece can be attached to the printed circuit board with screws or rivets. There is also the possibility that, when manufacturing the connectors, this piece or one similar is incorporated in the connector, or forms part of the metal structure which surrounds and makes up the connector.

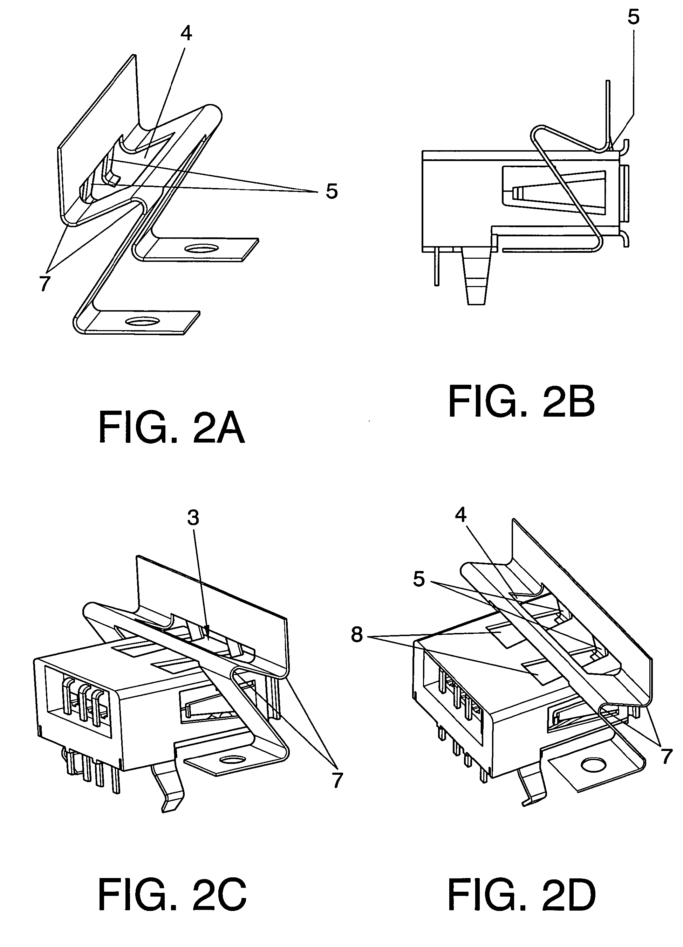

The modification necessary for the Standard Type A Receptacle connector consists of removing the flanges or strips of the upper part which, normally, exert pressure on the USB connector of the device inserted, and leaving these cavities (8) open to insert therethrough the claws of the designed pieces. In **figure 2D** the cavities (8) can be observed after having made the modification of withdrawing the flanges or strips of the Standard Type A Receptacle connector.

The example of **figures 2A-2D** consists of a device according to the object of the present invention which exerts a maximum pressure on the connector, at the same time which it features a maximum robustness and an easy unblocking with a tool, for example, with a screwdriver.

This piece is **characterized in that** it has creases (7) in acute angles, which confer to it great robustness and allow it to generate great pressure on the Receptacle connector. The inserted connector unblocks easily from the interior of the equipment with a screwdriver, acting as a lever at the point indicated with 3.

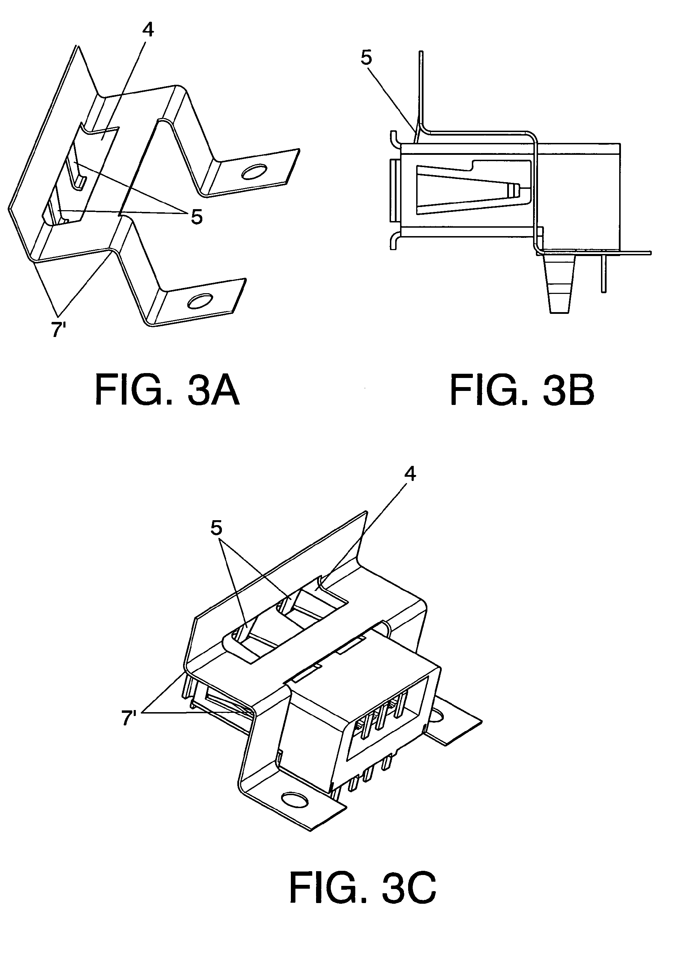

The example of **figures 3A-3C** consists of a device according to the object of the present invention which features an easy unblocking with a tool, for example, with a screwdriver and which is easy to build.

This piece is **characterized in that** it has two creases (7') at right angles which facilitate the production thereof. The inserted connector is also unblocked easily from the interior of the equipment with a screwdriver, acting as a lever between the two claws (5').

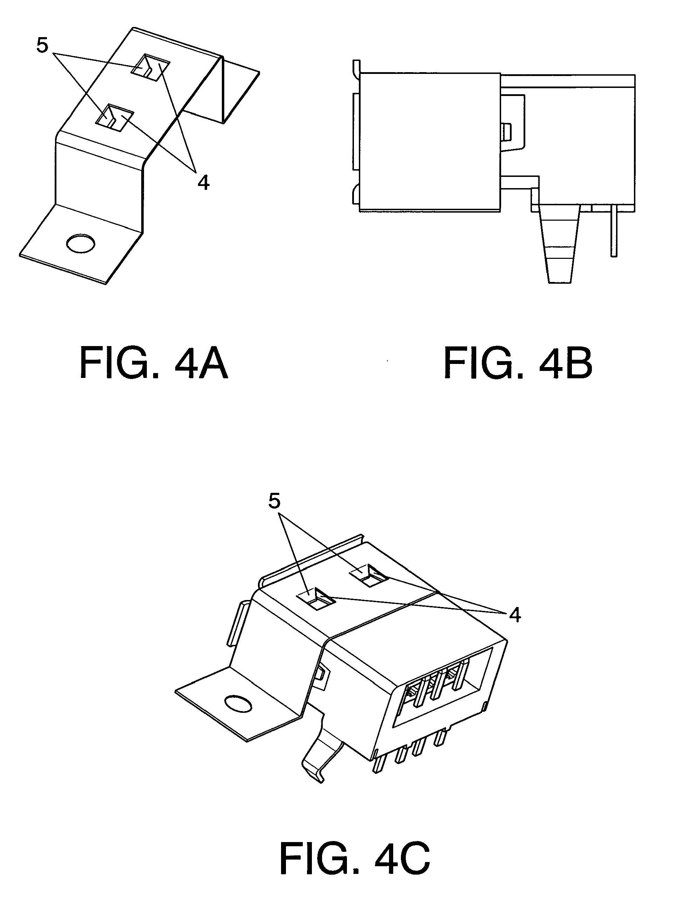

The example of **figure 4A-4C** consists of a device according to the object of the present invention without unblocking and easy to build.

This piece, even though it is very easy to build, does not have an unblocking mechanism. The only way of removing the USB device once inserted is to dismantle the blocking piece itself.

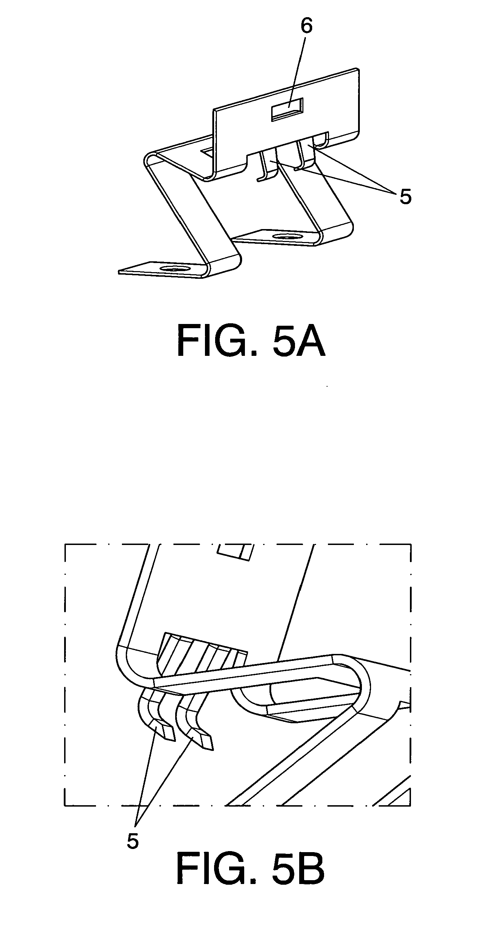

Obviously, in any of the pieces example of the present invention some functional variants can be introduced, such as, for example:
Variant 1: Unblocking from the exterior.
   Adding an additional opening (6) to the previous example, as can be observed in **figure 5A****,** makes the unblocking of the device accessible from the exterior by inserting a tool, such as a screwdriver. This permits a secure blocking of the device, which can be unblocked without needing to gain access to the interior of the equipment.
Variant 2: Sharpening tabs.
   The tabs can be sharpened (5'), as can be observed in **figure 5B** in order to facilitate that, in the attempt of removal; these tabs can slip in under the openings of the connector and ensure the blocking.

In the figures (see, for example, figures 2A, 3A, 4A, 5A and 5B) the openings (4) of the steel sheet as well as the projections, tabs, claws or hooks (5, 5') formed therein can be observed, with the aim of cooperating with the cavities or openings (2, 8) corresponding to the USB Plug and Receptacle connectors, as has been previously described and can be observed in the remaining drawings.

The present invention is not limited to the examples cited herein, this solely serving as a mode of specific embodiment of the principles thereof. The scope of the protection of the present invention is defined solely by the content of the claims which will be detailed below.

## Claims

1. Device intended to be incorporated in a USB receptacle connector, which comprises
a) mechanical connection means (5) between said device and said USB Receptacle connector; and
b) means (5) capable of cooperating with a USB Plug (1) connector at the time it is inserted into said USB Receptacle, so that, upon trying to remove said USB Plug connector, a locking or blocking thereof is produced which opposes said removal.

2. Device according to claim 1, **characterised in that** it comprises a sheet of rigid or flexible material which features at least one projection (5) intended to:
a) mechanically connect said device with said USB Receptacle connector; and, at the same time,
b) cooperate with a USB Plug (1) connector at the moment it is inserted into the USB receptacle connector, so that, upon trying to remove said USB Plug (1) connector a locking or blocking thereof is produced which opposes said removal.

3. Device according to claims 1 or 2, **characterised in that** said material is steel.

4. Device according to claims 2 or 3, **characterised in that** said sheet features at least one opening (4) where said at least one projection (5) is found.

5. Device according to any of claims 2 to 4, **characterised in that** said sheet features at least two folds or creases (5, 5') with the object of adapting to the shape of said USB Receptacle connector.

6. Device according to claim 5, **characterised in that** said creases are at acute angles (5).

7. Device according to claim 5, **characterised in that** said creases are at right angles (5).

8. Device according to any of claims 2 to 7, **characterised in that** said at least one projection consists of two claws or hooks (5, 5') which cooperate both with the two cavities (8) of said USB Receptacle connector in order to perform said mechanical connection and with the corresponding rectangular openings (2) of said USB Plug (1) connector in order to produce said locking or blocking.

9. Device according to claim 8, **characterised in that** said claws or hooks (5) are pointed claws or hooks (5').

10. Device according to any of claims 1 to 9, **characterised in that** it comprises means (3) capable of cooperating with a tool exterior to the device and which causes the unblocking of said USB Plug (1) connector and makes its removal possible.

11. Device according to claim 10, **characterised in that** said means (3) capable of cooperating with a tool are only accessible from the interior of the electronic equipment where said USB Receptacle connector is installed.

12. Device according to claim 10, **characterised in that** said sheet features a second opening (6) intended to make it possible for said means (3) capable of cooperating with a tool are also accessible from the exterior of the electronic equipment where said USB Receptacle connector is installed.

13. Device according to any of claims 1 to 12, **characterised in that** it comprises means capable of attaching said device to a printed circuit or to another internal part of the electronic equipment where said USB Receptacle connector is installed.

14. Device according to any of claims 1 to 12, **characterised in that** it forms an integral part of the structure of said USB Receptacle connector.

15. Method of preventing the undesired disconnection between a USB Receptacle connector and a USB Plug connector (1), **characterized in that** it comprises the following steps:
a) modifying said USB receptacle connector so that the two cavities (8) are free of their corresponding strips or flanges;
b) providing a device according to at least one of the claims 1 to 14;
c) incorporating said device to said USB Receptacle connector so that the projections (5, 5') thereof cooperate with said cavities (8); and
d) inserting said USB Plug (1) connector into said USB Receptacle connector so that said projections (5, 5') of said device cooperate with the openings (2) of said USB Plug (1) connector so that it is blocked or locked.

16. Method according to claim 15, **characterised in that** it additionally comprises the stage of using a tool which cooperates with said device with the object of unblocking the connection and allowing for the removal of said USB Plug (1) connector.
